# EUROPEAN PATENT SPECIFICATION

(11) **EP 1 450 724 B1**
(45) Date of publication and mention of the grant of the patent: **21.03.2007**
(21) Application number: 02781564.6
(22) Date of filing: 21.11.2002
(51) Int. Cl.: A61C 13/30, A61C 5/02

(54) **A SUPPORTING AND STRENGTHENING ELEMENT FOR DENTAL PROSTHESES OR CROWN RESTORATIONS**
STÜTZ- BZW. VERSTÄRKUNGSELEMENT FÜR ZAHNPROTHESEN ODER KRONENRESTAURATIONEN
ELEMENT DE SUPPORT ET DE RENFORCEMENT DE PROTHESES DENTAIRES OU DE RESTAURATIONS DE COURONNES

(30) Priority: 30.11.2001 IT BO20010738
(43) Date of publication of application: 01.09.2004
(73) Proprietor: Chiarini, Valeria, 40026 Imola (IT)
(72) Inventor: Chiarini, Valeria, 40026 Imola (IT)
(74) Representative: Lanzoni, Luciano
(86) International application number: PCT/IB2002/004873
(87) International publication number: WO 2003/045270

(56) References cited:
- EP-A- 0 245 878
- US-A- 4 239 489
- US-A- 4 778 388
- US-B1- 6 186 791

## Description

### Technical Field

The present invention relates to a supporting and strengthening element for dental prostheses, in particular an endocanal post used to support crowns covering dental stumps or for supporting crown restorations.

### Background Art

At present, in dental restoration techniques, one of the procedures carried out to repair a devitalised tooth (without the outer portion) and to restore or cover it with an artificial crown is the insertion of single posts, as a strengthening measure, in the root canals of the tooth, that is to say, in the zone without pulpal tissue. A portion of the post projects from the root canal, becoming an integral part of the tooth stump and supporting the crown or restoration material, as in US 4 778 388.

However, the tooth restored in this way may, over time, be subject to periapical infections (that is to say, granulomas and/or other acute pathologies), or may require, for example after traumas, removal of the post from the root canal to allow deep treatment of the tooth, followed by insertion of a new post for restoration of the tooth. These posts are normally made of composite material, such as synthetic polymer-matrix fibre.

Moreover, conventional posts are difficult to remove without compromising the integrity of the parts of the tooth still present. This is because the operator cannot correctly direct the instrument (normally a cutter) axially along the length of the post (partly due to the fact that the post is so small) and so also removes part of the dental tissue present. This operation may also lead to removal of the remaining root from the tooth, if a large amount of tissue is removed, enough to seriously compromise the structural strength, or if the root were accidentally perforated from inside.

### Disclosure of the Invention

The aim of the present invention is, therefore, to overcome the above-mentioned disadvantages with a supporting element for dental prostheses with high levels of mechanical holding and medical safety and, if necessary, easily removable from the root canal, significantly limiting the removal of the dental tissue surrounding the element.

This aim is achieved by a supporting element for dental prostheses applicable in the root canals of teeth treated with endodontic techniques and comprising a post with a radial cross-section which is not homogeneous, designed to form, along its longitudinal axis, a duct forming a guide for the passage of an instrument for treatment of the root canal or an instrument for removing the post from the root canal to allow the subsequent insertion of a new post.

### Brief Description of the Drawings

The technical features of the present invention, in accordance with the above-mentioned aims, are set out in the claims herein and the advantages more clearly illustrated in the detailed description which follows, with reference to the accompanying drawings, which illustrate a preferred embodiment, without limiting the scope of its application, and in which:
Figure 1 is a schematic longitudinal section with some parts cut away to better illustrate others of a supporting element made in accordance with the present invention applied in a root canal of a tooth treated;
Figure 2 is a longitudinal section of the supporting element illustrated in Figure 1;
Figures 3 to 7 are schematic cross-sections with some parts cut away to better illustrate others of a sequence for removing the element illustrated in Figures 1 and 2.

### Detailed Description of the Preferred Embodiments of the Invention

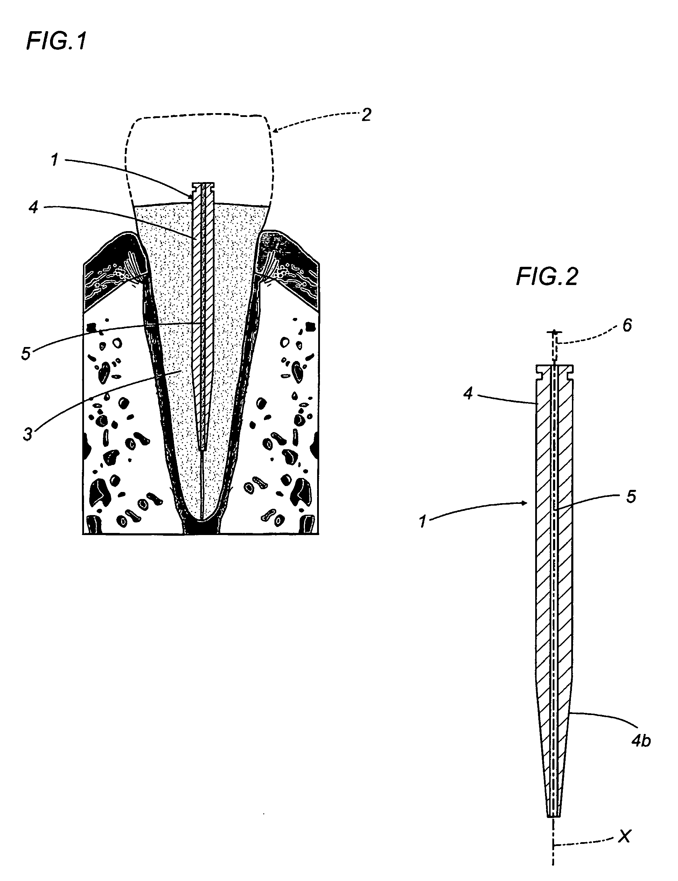

With reference to the accompanying drawings, and in particular with reference to Figure 1, the element disclosed, labelled 1 as a whole, is used to support dental prostheses 2, and can be applied in the root canals 3 of teeth treated with endodontic techniques, such as devitalisation, where the element 1 is inserted in place of the pulpal tissue removed during the devitalising therapy.

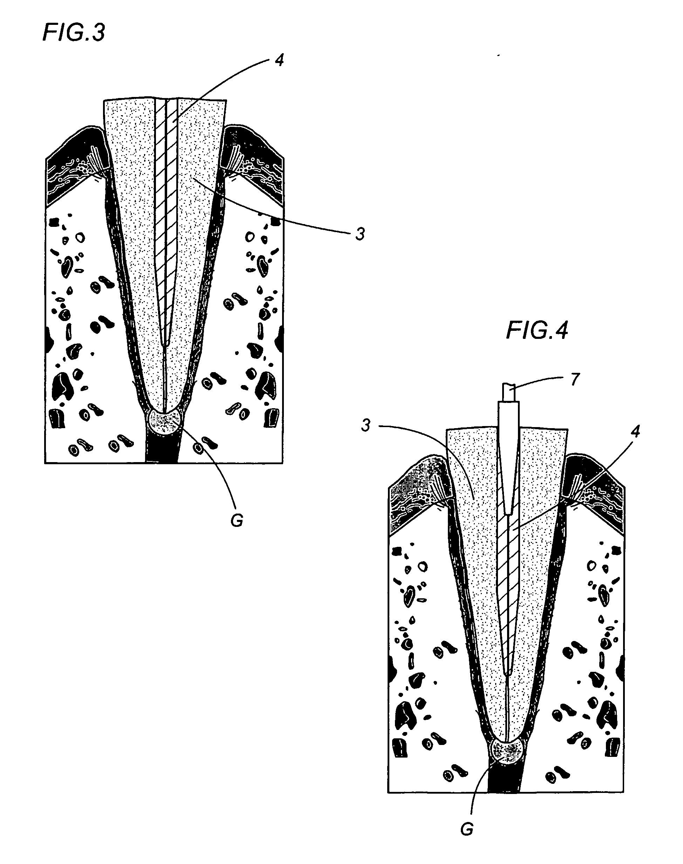

The element 1 comprises a post 4 with a radial cross-section which is not homogeneous and which forms, along its longitudinal axis X, a duct 5 forming a guide for the passage of an instrument 6 (of the known type and so only illustrated schematically) for treating the root canal 3 or an instrument 7 for removing the post 4 from the root canal 3 (normally a calibrated cutter or diamond blade, as illustrated in Figures 3 to 7).

At a structural level, the post 4 may have a first portion 4a which is cylindrical, and an end portion 4b which is tapered, so that it is more suited to the root canal.

Obviously, this geometrical shape is only illustrated by way of example, without limiting the scope of the invention, since, depending on treatment requirements, the post may be made with various cylindrical, truncated-cone or pointed shapes or combinations of them, without limiting the scope of the inventive concept.

In addition, the post 4 may have various surface shapes, having a rough surface or micro or macroscopic projections on the surface, or grooves.

The post 4 may comprise a guide duct 5 formed by a central through-hole running along the length of the longitudinal axis X of the post 4, for guiding the treatment instrument (so that the post 4 does not have to be taken out) or the removal instrument 7, if the post 4 does need removing.

In an alternative embodiment, the post 4 may comprise the above-mentioned guide duct 5 which is full of a soft material (at least softer than the material used to make the rest of the post) to allow a correct axial guide for the removal instrument 7, so that only the post 4 is removed.

More specifically, the post 4 is made of a material comprising pretensioned synthetic or natural fibre, whilst the duct 5 is made of soft, friable material.

The mechanical characteristics of the post 4 are not affected by the presence of this duct 5 which is empty or consists of a cylindrical portion of soft material, since the duct 5 is made at the neutral bending axis of the post 4, and therefore is not structurally important in mechanical terms.

Therefore, at least most of the body of the post 4 may be made of synthetic fibre of various types, preferably but not necessarily, subjected to pretensioning treatment. Such fibres may for example, be carbon, boron, polyethylene, silicon carbide, whiskers, aramidic, alumina, ceramic, quartz, silica, metal fibres, glass fibres, etc.

The duct 5 made along the longitudinal axis X of the post 4 may be obtained with a heat-resistant, radiopaque and inert material and may be a compressed powder or sintered material (for example, quartz, silica, various types of vitreous material, ceramic or graphite). Alternatively, the duct 5 may be made using polymers in the form of monofilaments, tubes or solid pastes (for example, Teflon^{®}, PVC, ABS, polycarbonate, polyethylene, nylon^{®}, silicones, etc.), or elastomer and rubbers, in particular transparent rubbers, such as gutta-perchas, silicone rubbers, mercaptan etc.

Therefore, the post 4 is made starting with pretensioned bands of synthetic fibres, the inside having a coaxial nucleus of softer, friable material which is heat-resistant, radiopaque and inert, not as strong as the material used to make the post structure. This friable material fills the central hole of the bar of fibre. Once the polymer matrix inserted has been polymerised, impregnating the fibres, the result is a solid bar from which posts of the required size and shape are obtained by parallel turning with high-speed tools.

Obviously, the diameter of the duct 5 varies according to the strength required of the post (the diameter of the hole may range from just a few microns to several tenths of a mm).

Therefore, in practice, in the event of a periapical lesion of the root canal 3 (such as a granuloma G, see Figures 3 to 6) the supporting element 1 structured in this way allows two types of treatment.

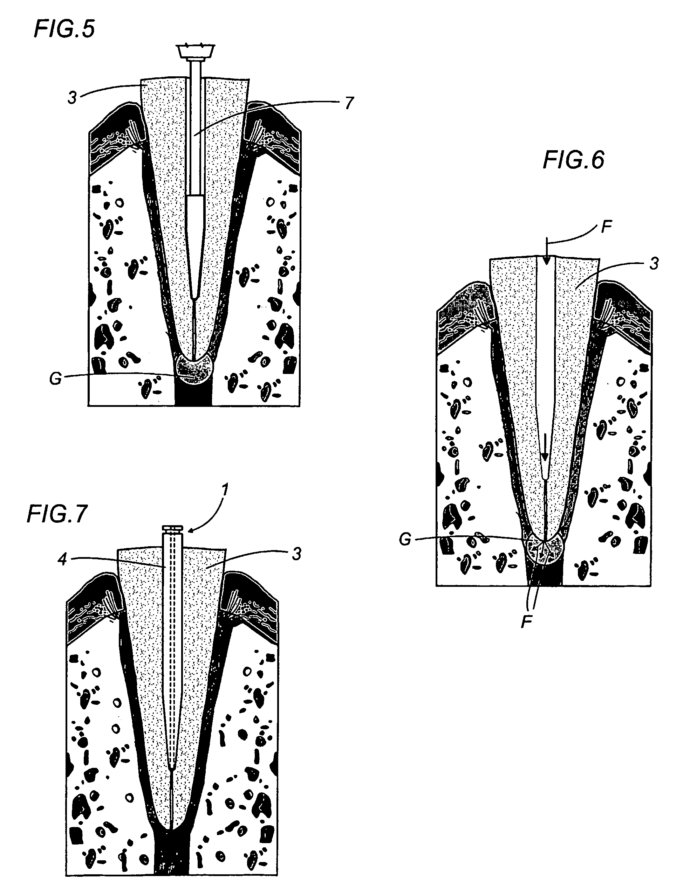

The first, simple type, involves reaching the infected area G, using the above-mentioned treatment instrument 6 and with disinfectants, using the hollow duct 5 and without having to remove the post 4 (see Figure 7 and arrows F).

The second type of treatment, if the post 4 comprises the duct 5 made using more friable material, involves removal of the endocanal post. As illustrated in Figure 3, the tooth stump and the crown-shaped part of the post are removed to the root level. At this point the cutter 7 is used to remove the post 4 using the duct 5 made of friable material as the guide (see Figures 4 and 5).

The duct allows the insertion of calibrated cutters 7 of a size and shape identical to the post. Since the material in the duct 5 is softer than the post 4, the duct 5 acts as a guide, keeping the cutter 7 coaxial with the post 4 and removing the material consumed from the inside to the outside. This process is aided by the extension of the post 4 fibres parallel with the duct 5. Consumption of the post 4 material, from a common centre, will be perfectly even, without any danger of perforations or removing dental substance which may weaken the tooth or the root canal 3.

When the post 4 is completely removed, the root canal 3 and the lesion G can be accessed, using the appropriate endodontic techniques to eliminate the latter (again see Figure 6). Once the tip of the root canal 3 has been sealed, a new post 4 of the same size can be inserted in the tooth which has healed (see Figure 7).

Therefore, a supporting element structured in this way, achieves the preset aims thanks to an inhomogeneous post structure, with strength similar to that of conventional posts (the fibres removed are the central ones very close to the neutral bending axis, therefore, not structurally important), but with a more rapid subsequent removal procedure, safe and simple, if required (due to endodontic failure, dental trauma, infiltration and secondary decay, renewal of prosthesis, etc).

If the clinical conditions require it, the post with through-hole can be left in situ, since the hole still allows the tip of the root to be reached with the appropriate instruments which reach the tip of the root through the post.

## Claims

1. A supporting element (1) for dental prostheses (2) which can be applied in root canals (3) of teeth treated with endodontic techniques, comprising a post (4) having, along its longitudinal axis (X), a duct (5) forming a guide for the passage of an instrument (6) for treating the root canal (3) or an instrument (7) for removing the post (4) from the root canal (3) **characterized in that** the duct (5) is made of a material softer than the material used to make the rest of the post (4), the post (4) being made from a solid bar obtained by pretensioned bands of fibres impregnated and polymerized.

2. The element according to claim 1, **characterised in that** the post (4) comprises the guide duct (5) formed by a central through-hole passing along the entire longitudinal axis (X) of the post (4).

3. The element according to claim 1, **characterised in that** the post (4) has a first portion (4a) which is cylindrical and an end portion (4b) which is tapered.

4. The element according to claim 1, **characterised in that** the post (4) is made of a material comprising polymer-matrix composite fibre and the duct (5) consists of soft material.

5. The element according to claim 1, **characterised in that** the post (4) is made of a material comprising pretensioned polymer-matrix composite fibre and the duct (5) consists of soft material.

6. The element according to claim 1, **characterised in that** the duct (5) consists of a cylindrical portion of soft material, made at the neutral bending axis of the post (4).

7. The element according to claim 1, **characterised in that** at least part of the post (4) is made of pretensioned carbon fibres.

8. The element according to claim 1, **characterised in that** at least part of the post (4) is made of pretensioned boron fibres.

9. The element according to claim 1, **characterised in that** at least part of the post (4) is made of pretensioned aramidic fibres.

10. The element according to claim 1, **characterised in that** at least part of the post (4) is made of pretensioned ceramic fibres.

11. The element according to claim 1, **characterised in that** at least part of the post (4) is made of pretensioned quartz fibres.

12. The element according to claim 1, **characterised in that** at least part of the post (4) is made of pretensioned whisker fibres.

13. The element according to claim 1, **characterised in that** at least part of the post (4) is made of pretensioned silica fibres.

14. The element according to claim 1, **characterised in that** at least part of the post (4) is made of pretensioned metal fibres.

15. The element according to claim 1, **characterised in that** at least part of the post (4) is made of pretensioned glass fibres.

16. The element according to claim 1, **characterised in that** the duct (5) consists of a cylindrical portion of material which is heat-resistant, radiopaque and inert and which is softer than the material used to make the rest of the post (4).

17. The element according to claim 16, **characterised in that** the cylindrical portion (5) consists of material which is a compressed powder.

18. The element according to claim 16, **characterised in that** the cylindrical portion (5) consists of a sintered powdered material.

19. The element according to claim 16, **characterised in that** the cylindrical portion (5) consists of a polymeric material formed by monofilaments.

20. The element according to claim 16, **characterised in that** the cylindrical portion (5) consists of a polymeric material in a solid paste.

21. The element according to claim 16, **characterised in that** the cylindrical portion (5) consists of a rubber material.

22. The element according to claim 16, **characterised in that** the cylindrical portion (5) consists of a transparent rubber material.

## Patentansprüche

1. Stützelement (1) für Zahnprothesen (2), das in Wurzelkanälen (3) von Zähnen angeordnet werden kann, die mit endodontischen Verfahren behandelt wurden, und das einen Stift (4) umfasst, der entlang seiner Längsachse (X) einen Gang (5) aufweist, der eine Führung zum Durchlassen eines Instruments (6) zur Behandlung des Wurzelkanals (3) oder eines Instruments (7) zum Entfernen des Stiftes (4) aus dem Wurzelkanal (3) bildet, **dadurch gekennzeichnet, dass** der Gang (5) aus einem Material ausgebildet ist, das weicher ist als das Material, das benutzt wird, um den Rest des Stiftes (4) herzustellen, wobei der Stift (4) aus einem massiven Stab hergestellt ist, der durch vorgespannte Bänder aus imprägnierten und polymerisierten Fasern ausgebildet wurde.

2. Element nach Anspruch 1, **dadurch gekennzeichnet, dass** der Stift (4) den Führungsgang (5) umfasst, der durch eine zentrale Durchgangsbohrung ausgebildet ist, die entlang der gesamten Längsachse (X) des Stiftes (4) verläuft.

3. Element nach Anspruch 1, **dadurch gekennzeichnet, dass** der Stift (4) einen ersten Abschnitt (4a), der zylindrisch ist, und einen Endabschnitt (4b) aufweist, der sich verjüngt.

4. Element nach Anspruch 1, **dadurch gekennzeichnet, dass** der Stift (4) aus einem Material hergestellt ist, das eine Polymermatrixverbundfaser umfasst, und dass der Gang (5) aus weichem Material besteht.

5. Element nach Anspruch 1, **dadurch gekennzeichnet, dass** der Stift (4) aus einem Material hergestellt ist, das eine vorgespannte Polymermatrixverbundfaser umfasst, und dass der Gang (5) aus weichem Material besteht.

6. Element nach Anspruch 1, **dadurch gekennzeichnet, dass** der Gang (5) aus einem zylindrischen Abschnitt aus weichem Material besteht, der an der neutralen Biegeachse des Stiftes (4) ausgebildet ist.

7. Element nach Anspruch 1, **dadurch gekennzeichnet, dass** der letzte Teil des Stiftes (4) aus vorgespannten Kohlenstofffasern hergestellt ist.

8. Element nach Anspruch 1, **dadurch gekennzeichnet, dass** wenigstens ein Teil des Stiftes (4) aus vorgespannten Borfasern hergestellt ist.

9. Element nach Anspruch 1, **dadurch gekennzeichnet, dass** wenigstens ein Teil des Stiftes (4) aus vorgespannten Aramidfasern hergestellt ist.

10. Element nach Anspruch 1, **dadurch gekennzeichnet, dass** wenigstens ein Teil des Stiftes (4) aus vorgespannten Keramikfasern hergestellt ist.

11. Element nach Anspruch 1, **dadurch gekennzeichnet, dass** wenigstens ein Teil des Stiftes (4) aus vorgespannten Quarzfasern hergestellt ist.

12. Element nach Anspruch 1, **dadurch gekennzeichnet, dass** wenigstens ein Teil des Stiftes (4) aus vorgespannten Whisker-Fasern hergestellt ist.

13. Element nach Anspruch 1, **dadurch gekennzeichnet, dass** wenigstens ein Teil des Stiftes (4) aus vorgespannten Quarzglasfasern hergestellt ist.

14. Element nach Anspruch 1, **dadurch gekennzeichnet, dass** wenigstens ein Teil des Stiftes (4) aus vorgespannten Metallfasern hergestellt ist.

15. Element nach Anspruch 1, **dadurch gekennzeichnet, dass** wenigstens ein Teil des Stiftes (4) aus vorgespannten Glasfasern hergestellt ist.

16. Element nach Anspruch 1, **dadurch gekennzeichnet, dass** der Gang (5) aus einem zylindrischen Abschnitt aus einem Material besteht, das wärmebeständig, röntgenstrahlenundurchlässig und inert ist, und das weicher ist als das Material, das benutzt wird, um den Rest des Stiftes (4) herzustellen.

17. Element nach Anspruch 16, **dadurch gekennzeichnet, dass** der zylindrische Abschnitt (5) aus Material besteht, das ein gepresstes Pulver ist.

18. Element nach Anspruch 16, **dadurch gekennzeichnet, dass** der zylindrische Abschnitt (5) aus gesintertem gepulvertem Material besteht.

19. Element nach Anspruch 16, **dadurch gekennzeichnet, dass** der zylindrische Abschnitt (5) aus einem polymerischen Material besteht, das aus Monofilamenten gebildet ist.

20. Element nach Anspruch 16, **dadurch gekennzeichnet, dass** der zylindrische Abschnitt (5) aus einem polymerischen Material in einer festen Paste besteht.

21. Element nach Anspruch 16, **dadurch gekennzeichnet, dass** der zylindrische Abschnitt (5) aus einem Gummimaterial besteht.

22. Element nach Anspruch 16, **dadurch gekennzeichnet, dass** der zylindrische Abschnitt (5) aus einem transparenten Gummimaterial besteht.

## Revendications

1. Un élément de support (1) de prothèses dentaires (2) qui peut être appliqué dans les canaux radiculaires (3) de dents traitées par des techniques endodontiques et qui comprend une tige (4) ayant, le long de son axe longitudinal (X), un conduit (5) définissant un guide pour le passage d'un instrument (6) servant au traitement du canal radiculaire (3) ou d'un instrument (7) servant à l'extraction de la tige (4) du canal radiculaire (3), ledit élément étant **caractérisé en ce que** le conduit (5) est réalisé avec un matériau qui est plus souple que le matériau utilisé pour réaliser le reste de la tige (4), ladite tige (4) étant réalisée à partir d'une barre solide obtenue par des bandes prétendues de fibres imprégnées et polymérisées.

2. L'élément selon la revendication 1, **caractérisé en ce que** la tige (4) comprend le conduit de guidage (5) qui est défini par un trou central débouchant passant tout le long de l'axe longitudinal (X) de la tige (4).

3. L'élément selon la revendication 1, **caractérisé en ce que** la tige (4) a une première partie (4a) qui est cylindrique et une partie d'extrémité (4b) qui est conique.

4. L'élément selon la revendication 1, **caractérisé en ce que** la tige (4) est réalisée dans un matériau comprenant une fibre composite à matrice polymère et le conduit (5) est constitué d'un matériau souple.

5. L'élément selon la revendication 1, **caractérisé en ce que** la tige (4) est réalisée dans un matériau comprenant une fibre composite à matrice polymère prétendue et le conduit (5) est constitué d'un matériau souple.

6. L'élément selon la revendication 1, **caractérisé en ce que** le conduit (5) consiste en une portion cylindrique de matériau souple, réalisée au niveau de l'axe neutre de flexion de la tige (4).

7. L'élément selon la revendication 1, **caractérisé en ce qu'**au moins une partie de la tige (4) est réalisée avec des fibres de carbone prétendues.

8. L'élément selon la revendication 1, **caractérisé en ce qu'**au moins une partie de la tige (4) est réalisée avec des fibres de bore prétendues.

9. L'élément selon la revendication 1, **caractérisé en ce qu'**au moins une partie de la tige (4) est réalisée avec des fibres aramides prétendues.

10. L'élément selon la revendication 1, **caractérisé en ce qu'**au moins une partie de la tige (4) est réalisée avec des fibres céramiques prétendues.

11. L'élément selon la revendication 1, **caractérisé en ce qu'**au moins une partie de la tige (4) est réalisée avec des fibres de quartz prétendues.

12. L'élément selon la revendication 1, **caractérisé en ce qu'**au moins une partie de la tige (4) est réalisée avec des fibres whiskers prétendues.

13. L'élément selon la revendication 1, **caractérisé en ce qu'**au moins une partie de la tige (4) est réalisée avec des fibres de silice prétendues.

14. L'élément selon la revendication 1, **caractérisé en ce qu'**au moins une partie de la tige (4) est réalisée avec des fibres métalliques prétendues.

15. L'élément selon la revendication 1, **caractérisé en ce qu'**au moins une partie de la tige (4) est réalisée avec des fibres de verre prétendues.

16. L'élément selon la revendication 1, **caractérisé en ce que** le conduit (5) consiste en une portion cylindrique de matériau qui résiste à la chaleur, est radiopaque et inerte et qui est plus souple que le matériau utilisé pour réaliser le reste de la tige (4).

17. L'élément selon la revendication 16, **caractérisé en ce que** la portion cylindrique (5) est constituée d'un matériau consistant en de la poudre comprimée.

18. L'élément selon la revendication 16, **caractérisé en ce que** la portion cylindrique (5) est constituée d'un matériau consistant en de la poudre frittée.

19. L'élément selon la revendication 16, **caractérisé en ce que** la portion cylindrique (5) est constituée d'un matériau polymère formé par des monofilaments.

20. L'élément selon la revendication 16, **caractérisé en ce que** la portion cylindrique (5) est constituée d'un matériau polymère en pâte solide.

21. L'élément selon la revendication 16, **caractérisé en ce que** la portion cylindrique (5) est constituée d'un matériau caoutchouc.

22. L'élément selon la revendication 16, **caractérisé en ce que** la portion cylindrique (5) est constituée d'un matériau caoutchouc transparent.
